# EUROPEAN PATENT APPLICATION

(11) **EP 1 209 577 A1**
(43) Date of publication of application: **29.05.2002**
(21) Application number: 01908296.5
(22) Date of filing: 05.03.2001
(51) Int. Cl.: G06F 15/00, G06F 13/00

(54) **WEB PAGE BROWSING LIMITING METHOD AND SERVER SYSTEM**

(30) Priority: 03.03.2000 JP 2000059223
(71) Applicant: Seiko Epson Corporation, Shinjuku-ku, Tokyo 163-0811 (JP)
(72) Inventor: HAJI, Hisao, Suwa-Shi, Nagano 392-8502 (JP); GOTO, Eriko, Suwa-Shi, Nagano 392-8502 (JP); SHIBUSAWA, Yasuo, Suwa-Shi, Nagano 392-8502 (JP); OSHIMA, Yasuhiro, Suwa-Shi, Nagano 392-8502 (JP)
(74) Representative: Sturt, Clifford Mark
(86) International application number: JP0101673
(87) International publication number: WO0165387

(57) **Abstract**

Plural Web pages 5 that are provided by a server include specified Web pages to which access is permitted only to specified users. When the server accepts specified user authentication information inputted by the user, the server transmits a specified Web page 13 that has a flag embedded therein to the terminal of the user. When the specified user who accessed the specified Web page 13 requests access to another specified Web page, the server receives link data 31. Only when a flag 32 that is simultaneously received is effective, a next specified Web page is transmitted to the terminal. Accordingly, only when a specified user requests access according to a normal procedure, a corresponding Web page is transmitted to the user and access is permitted.

## Description

### BACKGROUND OF THE INVENTION

### FIELD OF THE INVENTION

The present invention relates to a Web page access restriction method and a server system that discriminates specified users from general users to allow access to a Web page.

### DESCRIPTION OF PRIOR ART

In networks such as the Internet, various information is published on Web pages. The Web pages include pages that can be freely accessed by anyone and pages that can be accessed only by users who are formally registered. A Web page memory apparatus of a server is provided with, for example, folders that store Web pages that can be freely accessed by anyone and folders that store Web pages that can be accessed only by specified users.

When there is an access request of a Web page that can be accessed only by specified users, an operating system of the server requests the user to input a user ID and a password. Only when the inputted user ID and the password are formally registered, the operating system will allow access to that Web page.

The conventional technology described above has the following problems to be solved.

As described above, an ordinary operating system may be equipped with a function to restrict accesses to each folder. However, in order to restrict accesses, the users need to be registered in the operating system itself. However, as the number of users for the operating system is increased, entrances to the system may be increased, which is not desirable in terms of security. Also, when the number of users is increased, management of the users becomes more complex.

In accordance with another method, specified Web pages that do not publish their URLs are prepared for the users.

On a Web page displayed on a terminal of a user, a frame may be provided for inputting data for identifying the user, such as, a user ID, a password or the like. When the user inputs a correct user ID and password on the Web page, the server generates a URL (uniform resource locator) that allows access to a specified Web page, and transmits the specified Web page to the user's terminal.

When the correct user ID or password is not inputted, the user cannot access a specified Web page. However, if the user knows the URL of the specified Web page, and directly inputs that URL from his browser, he can access the specified Web page. Therefore it is difficult to securely prevent unauthorized accesses.

### DESCRIPTION OF THE INVENTION

The present invention employs the following compositions to solve the problems described above.

### <Composition 1>

A Web page access restriction method is characterized in that a plurality of Web pages provided by a server include a specified Web page that allows access only for a specified user, wherein, when the server determines that user authentication information transmitted from a terminal side belongs to the specified user, the server embeds a flag indicating that user authentication is completed in the specified Web page for the specified user and transmits the same to a terminal of the specified user.

Web pages that are published by a server through a network such as the Internet include those that can be freely accessed by anyone and those that can be accessed only by specified users. The server determines whether a user is a the specified user. Authentication information of specified users refers to information for authentication of the users such as user IDs and passwords. A flag indicating that user authentication has been completed is embedded in order for the server to be able to determine whether a Web page is a specified Web page to which access is permitted after user authentication has been completed. As a result, when the user accesses another specified page later, another user authentication is not necessary.

### <Composition 2>

In the Web page access restriction method according to Composition 1, the Web page access restriction method is characterized in that the specified Web page for the specified user is generated anew in the server after user authentication is completed.

The term "generating anew" includes situations in which an entire Web page is generated and situations in which a Web page is used as a base to generate remaining portions of another Web page.

When a specified Web page is generated after authentication, the specified Web page cannot be accessed without the user authentication. Also when specified Web pages that have different contents for different users are provided, a Web page having common portions is prepared, and it is modified after completion of user authentication and then transmitted. In this manner, a large number of Web pages does not need to be stored in a storage device.

### <Composition 3>

In the Web page access restriction method according to Composition 1 or Composition 2, the Web page access restriction method is characterized in that the flag is directly embedded in the specified Web page.

A flag may also be embedded in a predetermined location of data for displaying a Web page.

### <Composition 4>

In the Web page access restriction method according to Composition 1 or Composition 2, the Web page access restriction method is characterized in that the flag is embedded in any data that is required to display a specified Web page.

All data for displaying a Web page that are sent from the server to a user's terminal are data required for displaying the specified Web page. The flag may be included in some part of the data.

### <Composition 5>

In the Web page access restriction method according to Composition 1 or Composition 2, the Web page access restriction method is characterized in that the flag is encoded and embedded in the Web page.

This is done in order for a third person not to be able to recognize if a flag is embedded in a Web page. "Encoding" means making a flag in a form that cannot be readily recognized, and it can be in any form.

### <Composition 6>

In the Web page access restriction method according to Composition 1 or Composition 2, the Web page access restriction method is characterized in that, when link data for accessing a new specified Web page that uses the specified Web page displayed on a terminal of the user after completion of user authentication is sent to the server, the server determines whether or not an effective flag to be transmitted from the terminal of the user together with the link data is present, and when the flag is effective, the new specified Web page is transmitted to the terminal of the user.

According to the present invention, when a specified Web page is accessed after completion of user authentication, another user authentication process is not required. The specified Web page is embedded with a flag. When the new specified Web page is accessed, the flag is sent from the user's terminal at the same time. When the server detects an effective flag, it determines that it is an access request by the specified user. A case where a flag is not effective may mean it is a case where a flag cannot be received or a case where a received flag is ineffective.

### <Composition 7>

In the Web page access restriction method according to Composition 6, the Web page access restriction method is characterized in that, when the flag is effective, a new specified Web page with the flag embedded therein is transmitted to the user's terminal.

By embedding the flag in the new specified Web page, the same process can be conducted when an access to another new Web page is requested again.

### <Composition 8>

A Web page access restriction method is characterized in that a plurality of Web pages provided by a server include a specified Web page that allows access only to a specified user, wherein, when the server determines that user authentication information transmitted from a terminal side belongs to the specified user, the server embeds a flag indicating that user authentication has been completed in the specified Web page for the specified user and adds thereto a link data transmission restriction program that enables transmission of link data for accessing a new specified Web page to the server only when the flag is effective, and transmits the same to a terminal of the specified user.

When the specified Web page displays a button for allowing transmission of link data to the server for accessing a new specified Web page, and when this button is clicked, the link data can be transmitted to the server. It is noted that the new specified Web page is a Web page to which only the specified user is authorized access. In this instance, the link data transmission restriction program determines the effectiveness of the flag. When the link data transmission restriction program determines that the flag is effective, the link data is permitted to be transmitted to the server. In other cases, transmission of the link data is prohibited. Therefore, the server can transmit a specified Web page to a terminal without performing a special determination process.

### <Composition 9>

A server system that is connected to terminals used by users through a network, comprises a received data recognition section that determines whether or not user authentication information transmitted from a terminal side belongs to a specified user, and a Web page transmission section that, when the user authentication information is determined to belong to the specified user, embeds a flag indicating completion of user authentication in a specified Web page for the specified user and transmits the same to the terminal of the specified user.

The above is a system to perform the method of Composition 1.

### <Composition 10>

The server system according to Composition 9, further comprises a flag detection section that, when link data for accessing a new specified Web page using a specified Web page displayed on the terminal of the user after completion of user authentication is transmitted to the server, determines whether or not an effective flag to be transmitted from the terminal of the user together with the link data is present, wherein the Web page transmission section transmits the new specified Web page to the terminal of the user when the flag is effective.

The above is a system to perform the method of Composition 6.

### <Composition 11>

In the server system according to Composition 10, the Web page transmission section is characterized in that, when the flag is effective, a new specified Web page with the flag embedded therein is transmitted to the terminal of the user.

The above is a system to perform the method of Composition 7.

### <Composition 12>

A server system that is connected to terminals used by users through a network, comprises a received data recognition section that determines whether or not user authentication information transmitted from a terminal side belongs to a specified user, and a Web page transmission section that, when the user authentication information is determined to belong to the specified user, embeds a flag indicating that user authentication is completed in a specified Web page for the specified user and adds thereto a link data transmission restriction program that enables transmission of link data for accessing a new specified Web page to the server only when the flag is effective, and transmits the same to a terminal of the specified user.

The above is a system to perform the method of Composition 8.

### <Composition 13>

A Web page to which access is permitted only to a specified user is characterized in that a flag is embedded therein which indicates that a determination has been made that user authentication information transmitted from a terminal side belongs to the specified user and user authentication has been completed.

The above is a structure of a Web page for performing Composition 1 or the like.

### <Composition 14>

In the Web page according to Composition 13, the Web page is characterized in that a link data transmission restriction program is added thereto which enables transmission of link data for accessing a new specified Web page to the server only when the flag is effective.

The above is a Web page for performing Composition 8.

### <Composition 15>

A computer readable storage medium that stores a computer program that executes a process of determining whether or not user authentication information transmitted from a terminal side belongs to a specified user, and a process of embedding a flag indicating that user authentication is completed in a specified Web page and transmitting the same to a terminal of the specified user.

The above provides a computer program for a server for performing the invention of Composition 1.

### <Composition 16>

In the storage medium according to Composition 15, the computer readable storage medium stores a computer program that executes a process of, when link data for accessing a new specified Web page using a specified Web page displayed on the terminal of the user after completion of user authentication is transmitted to the server, determining whether or not an effective flag to be transmitted from the terminal of the user together with the link data is present, and a process of transmitting the new specified Web page to the terminal of the user when the flag is effective.

The above provides a computer program for a server for performing the invention of Composition 6.

### <Composition 17>

A computer readable storage medium stores a computer program that executes a process of determining if user authentication information transmitted from a terminal side belongs to a specified user, a process of embedding a flag indicating that user authentication is completed in a specified Web page that permits access only to the specified user, and a process of adding a link data transmission restriction program that enables transmission of link data for accessing a new specified Web page to the server only when the flag is effective and transmitting the same to a terminal of the specified user.

The above is software for a server for performing Composition 8.

### BRIEF DESCRIPTOIN OF THE DRAWINGS

Fig. 1 is a block diagram of a system that realizes a Web page access restriction method in accordance with one embodiment of the present invention.

Fig. 2 is an illustration that describes an entire system including a network between a server and a terminal.

Fig. 3 is an illustration that describes a link status of Web pages stored in a Web page storage section 4.

Fig. 4 shows a system block diagram that describes an operation to authenticate if a user is specified.

Fig. 5 is a flowchart of an authentication operation by the server, using the authentication Web page 10 shown in Fig. 4.

Fig. 6 is a flowchart of operation of the server after user authentication is completed in the system shown in Fig. 1.

Fig. 7 shows a variation example of the system in accordance with the present invention, in which Fig. 7(a) is an explanatory illustration of a Web page, and Fig. 7 (b) shows an operation flowchart at a terminal.

### BEST MODE OF THE INVENTION

Embodiments of the present invention are described below.

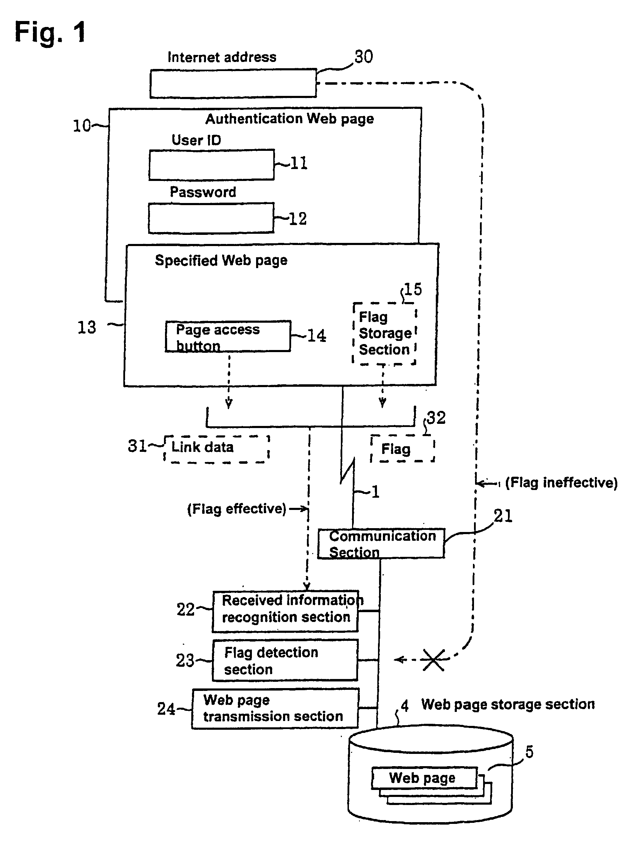

Fig. 1 is a block diagram of a system for implementing a Web page access restriction method in accordance with one embodiment of the present invention. Prior to describing this figure, a network between a server and a terminal and a system for transmitting Web pages are described.

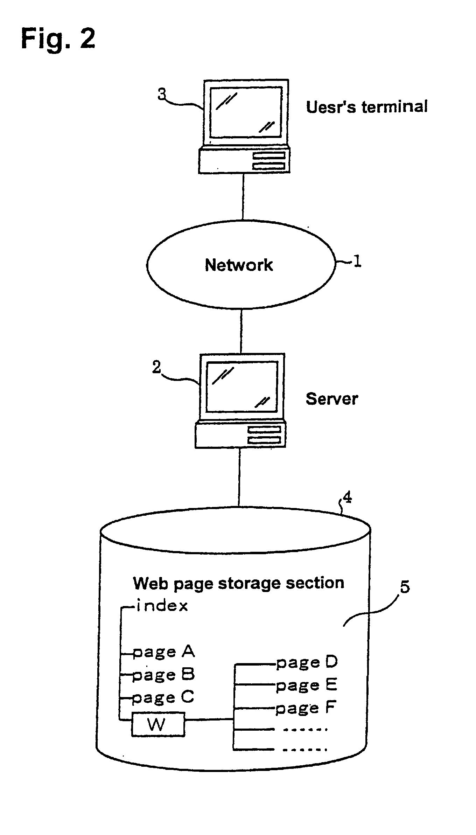

Fig. 2 is an illustration that describes an entire system including a network between a server and a terminal.

A network 1 in the figure may preferably be the Internet. In addition, any types of networks such as telephone networks, Intranet and the like may also be applicable.

The network 1 is connected to a server 2 and a terminal 3. The server 2 is equipped with a Web page storage section 4 that stores Web pages 5 to be distributed to the network. For example, in this embodiment example, the storage section 4 stores an index page, as well as pages including page A, page B, page C that are linked to the index page, and pages including page D, page E, page F that belong to a folder W. The Sever allows the user using a terminal to access the Web pages 5 through the network 1.

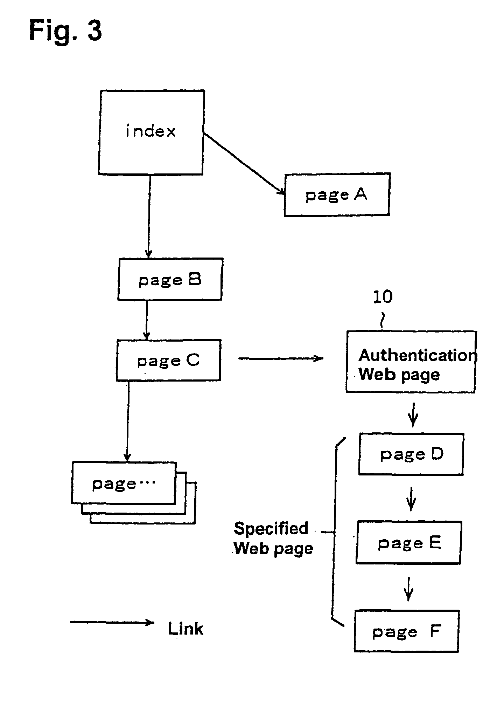

Fig. 3 is an illustration that describes a link status of the Web pages that are stored in the Web page storage section 4.

As shown in the figure, the index page, which is a home page, is initially accessed (that is indicated as "index" in the figure).

The index page is linked to Web pages that are represented as, for example, page A or page B. Also, page B is linked to a Web page that is presented as page C. Let us assume that these pages are freely accessible by general users.

On the other hand, page C is not only linked to other pages that can be freely accessible by anyone (that are indicated as "page ..." in the figure), but also is linked to an authentication Web page 10 that is used to authenticate whether the user is a specified user who has previously completed a predetermined registration process in the server 10 shown in Fig. 2. When the authentication Web page authenticates the specified user, the specified user is allowed to access page D. Also, page D is linked to page E and page F. In order to restrict such an access, a system such as the one shown in Fig. 1 is employed.

Referring to Fig. 1, the plurality of Web pages 5 stored in the Web page storage section 4 in the server include specified Web pages that permit access only by specified users. The authentication Web page 10 displayed on a terminal is a Web page that is used to authenticate a user that can access the specified Web pages. In this example, a user ID input frame 11 (that is generally called a text box) and a password input frame 12 are displayed.

The figure shows a state in which user authentication has already been completed and a first specified Web page 13 that allows access only to the user is displayed.

A Web page access button 14 for accessing other specified Web pages is displayed in the specified Web page 13. In addition, the specified Web page 13 includes a flag storage section 15 for embedding a predetermined flag.

The flag contains information to identify whether the Web page is a page being accessed by an authenticated specified user. In this example, the flag is directly embedded in the specified Web page 13. However, the flag can be included in any data that may be needed to display the specified Web page 13, and may not necessarily be directly embedded in the data of the Web page.

When the flag is embedded in the specified Web page, it may preferably be encoded so that a third person cannot readily recognize the embedded flag. Also, the flag may be included in an argument that is handed over when a new specified Web page to be displayed subsequently to the specified Web page is displayed.

In this embodiment, information for identifying a person, such as, a user ID and a password are referred to as specified user authentication information. The user ID input frame 11 and the password input frame 12 are frames for inputting specified user authentication information. The user authentication information that is inputted in the frames is transferred to the server through the network 1. Also, a page access button 14 is a button for transmitting link data for linking to a Web page that can be accessed only by specified users.

The server is provided with a communication section 21, a received information recognition section 22, a flag detection section 23, a Web page transmission section 24 and a Web page storage section 4. The communication section 21 is connected to the network, it controls transmission of Web pages or reception of data, and it is implemented by hardware or software. The received information recognition section 22 executes a process for recognizing user authentication information or link data transmitted from a terminal side.

When the received information recognition section 22 recognizes the reception of link data from a terminal, for example, the flag detection section 23 is able to detect a flag that has been simultaneously transmitted and determining the effectiveness thereof. The Web page transmission section is able to transmit the specified Web page to the terminal only when the flag in the flag storage section 15 is effective. The received information recognition section 22, the flag detection section 23 and the Web page transmission section 24 may be also implemented, for example, by software having the functions described above.

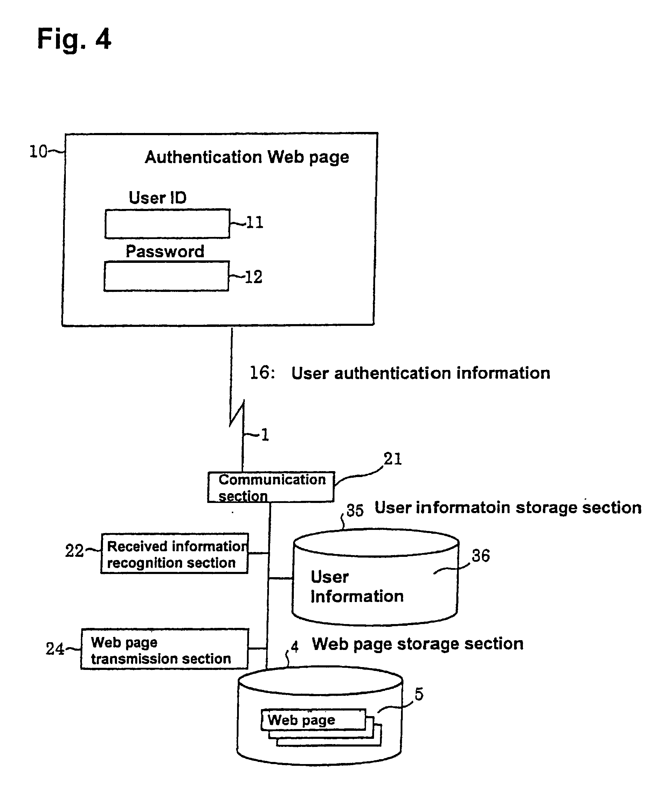

Fig. 4 shows a system block diagram that describes an operation to determine if a user is a specified user.

Authentication of a user can be done by determining whether a corresponding user ID, a password or the like is registered in user information 35 stored in the user information storage section 36 provided in the server, as shown in the figure. The received information recognition section 22 is capable of referring to the user information 36, and requesting the Web page transmission section 24 to transmit a specified Web page when a determination is made that the user authentication information 16 transmitted from a terminal belongs to a specified user The Web page transmission section 24 is capable of reading a Web page 5 stored in the Web page storage section 4, generating a specified Web page exclusive for the specified user by using data included in the user information 36 depending on the requirements, and transmitting the Web page to the terminal of the user. Also, at this moment, a flag is embedded in the specified Web page. The flag contains information indicating that user authentication has been completed.

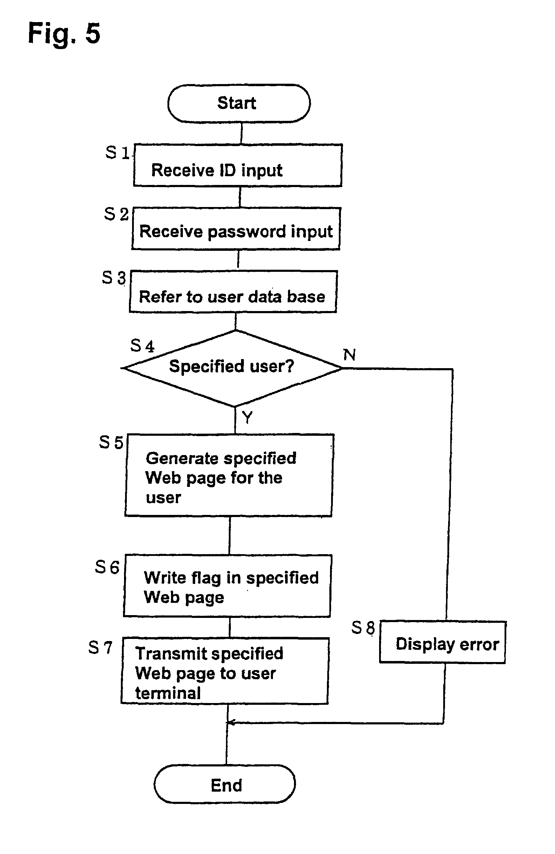

Fig. 5 is a flowchart of an authentication operation by the server, using the authentication Web page 10 shown in Fig. 4.

First, when the authentication Web page 10 shown in Fig. 4 is displayed on the terminal of the user, the user inputs a user ID in the user ID input frame 11 and a password in the password input frame 12. The server receives the user verification information inputted in these frames 11 and 12 through the network 1 (step S1, step S2).

In step S3, the received information recognition section 22 of the server refers to the user information 36 shown in Fig. 4., and makes a determination whether or not the user authentication information 16 belongs to a specified user (step S4). When it is determined that the information 16 belongs to a specified user, the received information recognition section 22 notifies the same to the Web page transmission section 24.

The Web page transmissions section 24 generates a specified Web page for the user in Step 5. In a succeeding step S6, the Web page transmission section 24 embeds a flag in the generated specified Web page. In a succeeding step S7, the Web page transmission section 24 transmits the specified Web page to the terminal of the user. When it is determined in step S4 that the user authentication information 16 does not belong to a specified user, an error indication is displayed on the terminal of the user and the process is completed.

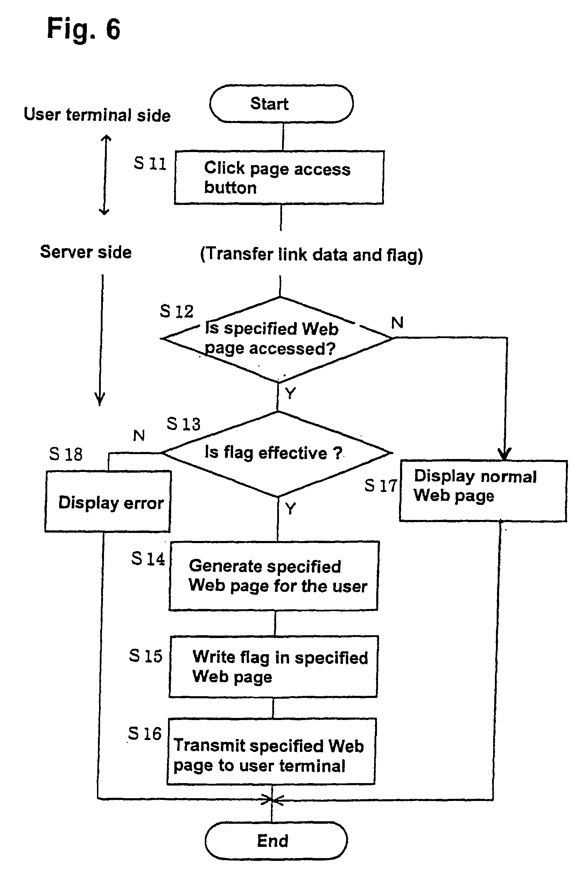

Fig. 6 is a flowchart of an operation of the server after user authentication is completed in the system shown in Fig. 1.

Referring to Fig. 1 and Fig. 6, the operation of the system is described. First, as shown in Fig. 1, a first specified Web page 13 after completion of user authentication is displayed on the terminal of the user. If the user desires to access a new specified Web page later, the user clicks the page access button 14 in Step S11, which causes link data 31 to be transmitted to the server. At this moment, a flag 32 stored in the flag storage section 15 is simultaneously transmitted to the server.

The server initially determines whether or not it is an access request for a specified Web page in step S12. When it is not an access request for a specified Web page, then the server proceeds to a normal Web page display process (step S17). In the case of an access request for a specified Web page, the received information recognition section 22 accepts the link data 31, and the flag detection section 23 determines whether or not the flag 32 is effective (step S13). When the flag is ineffective, an error display is made on the terminal of the user, and a Web page access is rejected (step S18).

When the flag is effective, the Web page transmission section 24 generates a specified Web page for the user in step S14. In a succeeding step S15, the Web page transmission section 24 embeds a flag in the generated specified Web page, and in a succeeding step S16, the Web page transmission section 24 transmits the specified Web page to the terminal of the user.

A specified Web page that can be accessed only by a specified user may be formed in a manner that it can be opened on each individual instance by the authentication process shown in Figs. 4 and 5.

However, it is troublesome if the user ID and the password need to be inputted every time pages to be accessed are switched after the user ID and password are once inputted. Therefore, in this example, as shown in the flowchart shown in Fig. 6, the user inputs the user ID and the password once for the first time, then the next page can be accessed by clicking the page access button.

As shown in Fig. 1, a frame 30 is prepared for inputting an Internet address (a URL of the Web page to be referred to) in a browser that displays the Web page 10 or 13. Let us assume that, for example, a user B may directly input the URL of the specified Web page from the frame in order to see the specified Web page to which access is permitted only to a user A. Although the URL is kept secret, the user B may obtain the URL by some means.

Conventionally, a server does not have means to discriminate an access request by the user A from others, and could transmit a specified Web page to an unauthorized user's terminal. In accordance with the present invention, the flag 32 is detected for discrimination, and therefore the specified Web page can be transmitted only to the user A who has undergone an authentication process.

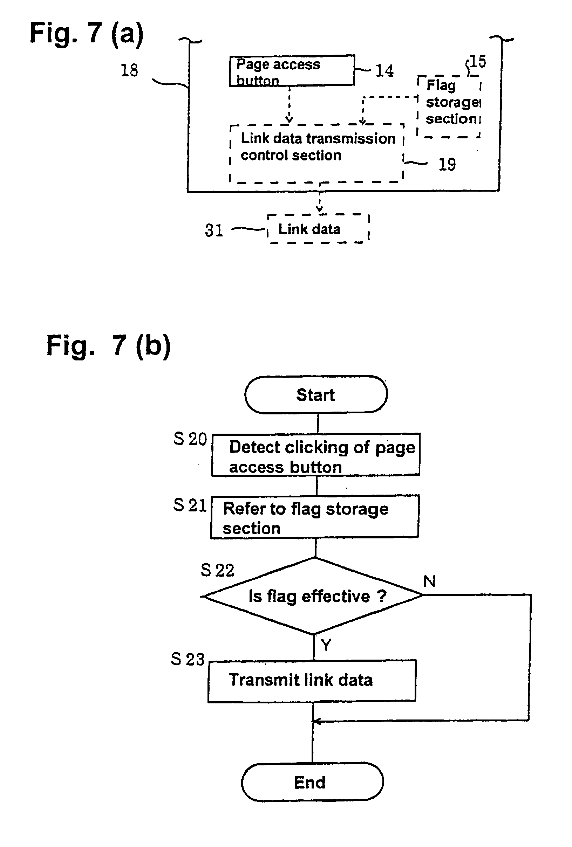

Fig. 7 shows a variation example of the system in accordance with the present invention, in which Fig. 7(a) is an explanatory illustration of a Web page, and Fig. 7 (b) shows an operation flowchart at a terminal.

A specified Web page 18 also has a page access button 14 and a flag storage section 15 in a similar manner as the specified Web page 13 shown in Fig. 1 does. Functions of these elements are the same as those shown in Fig 1. In this example, the specified Web page 18 is additionally provided with a link data transmission restriction section 19.

The link data transmission restriction section 19 may be implemented by a simple program added to the specified Web page 18, which may be written , for example, in Java Script (an object-oriented script language developed by Netscape).

As shown in Fig. 7 (b), when the Web page access button 14 is clicked by the user (step S20) to make link data ready for transmission, the link data transmission restriction section 19 refers to the flag storage section 15 (step S21), and determines whether or not the flag is effective (step S22). Further, the link data transmission restriction section 19 is capable of transmitting the link data to the server only when the flag is effective (step S23). In this manner, a determination which is done by the server in the previous embodiment example is performed on the Web page side, and therefore the server can immediately transmit the specified Web page without a special determination process by the server side.

By the process described above, the corresponding Web page is transmitted to the user and the user is allowed access only when the specified user makes an access request according to the normal procedure.

It is noted that the functional blocks of the server shown in Fig. 1 may be implemented by individual program modules, or may be formed from an integrated program module. Also, all of the functional blocks or parts thereof may be implemented by hardware with logic circuits. Also, each of the program modules may be incorporated into an existing application program or may be operated as independent programs.

A computer program that realizes the invention described above may be stored in a computer readable storage medium, such as CD-ROM, and can be installed for the use. Also, the computer program can be downloaded onto a computer memory through the network for the use.

## Claims

1. A Web page access restriction method **characterized in that** a plurality of Web pages that are provided by a server include a specified Web page to which access is permitted only to a specified user, wherein, when said server determines that user authentication information transmitted from a terminal side belongs to said specified user, the server embeds a flag indicating that user authentication is completed in the specified Web page for the specified user and transmits the same to a terminal of said specified user.

2. A Web page access restriction method according to claim 1, wherein the specified Web page of the specified user is generated anew in the server after user authentication is completed.

3. A Web page access restriction method according to claim 1 or claim 2, wherein the flag is directly embedded in the specified Web page.

4. A Web page access restriction method according to claim 1 or claim 2, wherein said flag is embedded in any data that is required to display a specified Web page.

5. A Web page access restriction method according to claim 1 or claim 2, wherein the flag is encoded and embedded in said Web page.

6. A Web page access restriction method according to claim 1 or claim 2, wherein, when link data for accessing a new specified Web page that uses a specified Web page displayed on a terminal of the user after completion of user authentication is sent to the server, said server determines whether or not an effective flag to be transmitted from the terminal of the user together with the link data is present, and when the flag is effective, said new specified Web page is transmitted to the terminal of said user.

7. A Web page access restriction method according to claim 6, wherein, when said flag is effective, a new specified Web page with the flag embedded therein is transmitted to the terminal of said user.

8. A Web page access restriction method **characterized in that** a plurality of Web pages that are provided by a server include a specified Web page to which access is permitted only to a specified user, wherein, when the server determines that user authentication information transmitted from a terminal side belongs to the specified user, the server embeds a flag indicating that user authentication has been completed in the specified Web page for the specified user and adds thereto a link data transmission restriction program that enables transmission of link data for accessing a new specified Web page to the server only when the flag is effective, and transmits the same to a terminal of the specified user.

9. A server system that is connected to terminals used by users through a network, comprising:
a received data recognition section that determines whether or not user authentication information transmitted from a terminal side belongs to a specified user; and
a Web page transmission section that, when the user authentication information is determined to belong to the specified user, embeds a flag indicating completion of user authentication in a specified Web page for the specified user and transmits the same to the terminal of said specified user.

10. A server system according to claim 9, further comprising a flag detection section that, when link data for accessing a new specified Web page using a specified Web page displayed on the terminal of the user after completion of user authentication is transmitted to the server, determines whether or not an effective flag to be transmitted from the terminal of said user together with said link data is present,
wherein the Web page transmission section transmits said new specified Web page to the terminal of said user when said flag is effective.

11. A server system according to claim 10, wherein the Web page transmission section transmits a new specified Web page with said flag embedded therein to the terminal of the user when the flag is effective.

12. A server system that is connected to terminals used by users through a network, the server system comprising:
a received data confirmation section that determines whether or not user authentication information transmitted from a terminal side belongs to a specified user; and
a Web page transmission section that, when the user authentication information is determined to belong to the specified user, embeds a flag indicating that user authentication has been completed in a specified Web page for the specified user and adds thereto a link data transmission restriction program that enables transmission of link data for accessing a new specified Web page to the server only when said flag is effective, and transmits the same to a terminal of said specified user.

13. A Web page to which access is permitted only to a specified user, the Web page comprising a flag embedded therein which indicates that a determination has been made that user authentication information transmitted from a terminal side belongs to the specified user and user authentication has been completed.

14. A Web page according to claim 13, further comprising a link data transmission restriction program added thereto that enables transmission of link data for accessing a new specified Web page to the server only when the flag is effective.

15. A computer readable storage medium that stores a computer program for executing:
a process of determining whether or not user authentication information transmitted from a terminal side belongs to a specified user: and
a process of embedding a flag indicating that user authentication is completed in a specified Web page and transmitting the same to a terminal of said specified user.

16. A computer readable storage medium according to claim 15: wherein a computer program is stored thereon for executing:
a process of, when link data for accessing a new specified Web page using a specified Web page displayed on the terminal of the user after completion of user authentication is transmitted to the server, determining whether or not an effective flag to be transmitted from the terminal of the user together with the link data is present;
and a process of transmitting the new specified Web page to the terminal of the user when the flag is effective.

17. A computer readable storage medium that stores a computer program for executing:
a process of determining if user authentication information transmitted from a terminal side belongs to a specified user:
a process of embedding a flag indicating that user authentication has been completed in a specified Web page to which access is permitted only to said specified user: and
a process of adding a link data transmission restriction program that enables transmission of link data for accessing a new specified Web page to the server only when said flag is effective and transmitting the same to a terminal of said specified user.
